(19) Europäisches Patentamt
European Patent Office
Office européen des brevets

(11) **EP 4 418 587 A1**

(12) **EUROPEAN PATENT APPLICATION**
published in accordance with Art. 153(4) EPC

(43) Date of publication:
**21.08.2024 Bulletin 2024/34**

(21) Application number: **22880426.6**

(22) Date of filing: **14.10.2022**

(51) International Patent Classification (IPC):
**H04L 5/00** [(2006.01)]

(52) Cooperative Patent Classification (CPC):
**H04L 5/00**

(86) International application number:
**PCT/CN2022/125408**

(87) International publication number:
**WO 2023/061490 (20.04.2023 Gazette 2023/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.10.2021 CN 202111205722**
**18.10.2021 CN 202111209306**

(71) Applicant: VIVO MOBILE COMMUNICATION CO., LTD.
**Dongguan, Guangdong 523863 (CN)**

(72) Inventors:
• **WANG, Fanggang**
**Guangdong 523863 (CN)**

• **WANG, Dong**
**Guangdong 523863 (CN)**
• **SUN, Bule**
**Guangdong 523863 (CN)**
• **LIU, Hao**
**Guangdong 523863 (CN)**
• **YUAN, Pu**
**Guangdong 523863 (CN)**
• **LI, Xiran**
**Guangdong 523863 (CN)**
• **SHAN, Yaru**
**Guangdong 523863 (CN)**
• **HAO, Yaxing**
**Guangdong 523863 (CN)**

(74) Representative: **Murgitroyd & Company**
**165-169 Scotland Street**
**Glasgow G5 8PL (GB)**

(54) **INFORMATION MAPPING METHOD AND COMMUNICATION DEVICE**

(57) This application discloses an information mapping method including: mapping, by a transmitting end device, first information to second information on a delay-Doppler frame. The delay-Doppler frame includes M×N grids, M is the total number of delay indexes, N is the total number of Doppler indexes, and both M and N are positive integers. The delay-Doppler frame includes at least two subframes, and each subframe includes a first guard interval portion, a first mapping portion, and two second mapping portions. The two second mapping portions occupy grids corresponding to $k_{max}$ Doppler indexes at a head and a tail of the subframe in a Doppler direction, and the first mapping portion occupies grids corresponding to ($N/G$ - 2$k_{max}$) Doppler indexes of the subframe; G being the number of subframes in the delay-Doppler frame, and $k_{max}$ being a positive integer. Information mapped to second mapping portions at heads of different subframes is the same, and information mapped to second mapping portions at tails of different subframes is the same.

```
          ┌─────────┐
          │  Start  │
          └─────────┘
               │
               ▼
┌──────────────────────────────────────┐
│ A transmitting end device maps first  │  ╮ 201
│ information to second information on a │  ╯
│ delay-Doppler frame                    │
└──────────────────────────────────────┘
               │
               ▼
          ┌─────────┐
          │   End   │
          └─────────┘
```

FIG. 2

## Description

## CROSS-REFERENCE TO RELATED APPLICATION

This application claims priority to Chinese Patent Application No. 202111209306.4, filed on October 18, 2021 in China, which is incorporated herein by reference in its entirety. This application further claims priority to Chinese Patent Application No. 202111205722.7, filed on October 15, 2021 in China.

## TECHNICAL FIELD

This application relates to the field of communication technologies, and in particular, to an information mapping method and a communication device.

## BACKGROUND

In related art, in a space-time coding scheme in delay-Doppler domain, it is assumed that channels of multiple delay-Doppler frames are the same, and therefore multiple consecutive delay-Doppler frames are used as a granularity at a transmitting end in space-time coding to obtain a diversity gain. However, due to the changing characteristics of channels and the large granularity of delay-Doppler frames, channels of multiple consecutive delay-Doppler frames are actually different. Therefore, it is not suitable to directly use the above assumption in space-time coding.

## SUMMARY

Embodiments of this application provide an information mapping method and a communication device, which can solve the problem of how channels of multiple delay-Doppler frames are ensured to be the same in space-time coding in delay-Doppler domain.

According to a first aspect, an information mapping method is provided and includes:

mapping, by a transmitting end device, first information to second information on a delay-Doppler frame; where
the delay-Doppler frame includes M×N grids, M is the total number of delay indexes, N is the total number of Doppler indexes, and both M and N are positive integers;
the delay-Doppler frame includes at least two subframes, and each subframe includes a first guard interval portion, a first mapping portion, and two second mapping portions;
the two second mapping portions occupy grids corresponding to $k_{max}$ Doppler indexes at a head and a tail of the subframe in a Doppler direction, and the first mapping portion occupies grids corresponding to ( $N/G$ - $2k_{max}$ ) Doppler indexes of the subframe; G being the number of subframes in the delay-Dop-

pler frame, and $k_{max}$ being a positive integer; and information mapped to second mapping portions at heads of different subframes is the same, and information mapped to second mapping portions at tails of different subframes is the same.

According to a second aspect, an information mapping apparatus is provided and includes:

a first mapping module configured to map first information to second information on a delay-Doppler frame; where
the delay-Doppler frame includes M×N grids, M is the total number of delay indexes, N is the total number of Doppler indexes, and both M and N are positive integers;
the delay-Doppler frame includes at least two subframes, and each subframe includes a first guard interval portion, a first mapping portion, and two second mapping portions;
the two second mapping portions occupy grids corresponding to $k_{max}$ Doppler indexes at a head and a tail of the subframe in a Doppler direction, and the first mapping portion occupies grids corresponding to ( $N/G$ - $2k_{max}$ ) Doppler indexes of the subframe; G being the number of subframes in the delay-Doppler frame, and $k_{max}$ being a positive integer; and information mapped to second mapping portions at heads of different subframes is the same, and information mapped to second mapping portions at tails of different subframes is the same.

According to a third aspect, a communication device is provided and includes a processor, a memory, and a program or instructions stored in the memory and executable on the processor, and when the program or the instructions are executed by the processor, steps of the method according to the first aspect are implemented.

According to a fourth aspect, a communication device is provided and includes a processor and a communication interface. The processor is configured to map first information to second information on a delay-Doppler frame; where

the delay-Doppler frame includes M×N grids, M is the total number of delay indexes, N is the total number of Doppler indexes, and both M and N are positive integers;
the delay-Doppler frame includes at least two subframes, and each subframe includes a first guard interval portion, a first mapping portion, and two second mapping portions;
the two second mapping portions occupy grids corresponding to $k_{max}$ Doppler indexes at a head and a tail of the subframe in a Doppler direction, and the first mapping portion occupies grids corresponding to ( $N/G$ - $2k_{max}$ ) Doppler indexes of the subframe; G being the number of subframes in the delay-Dop-

pler frame, and $k_{max}$ being a positive integer; and information mapped to second mapping portions at heads of different subframes is the same, and information mapped to second mapping portions at tails of different subframes is the same.

According to a fifth aspect, a readable storage medium is provided, where the readable storage medium stores a program or instructions, and when the program or the instructions are executed by a processor, steps of the method according to the first aspect are implemented.

According to a sixth aspect, a chip is provided. The chip includes a processor and a communication interface. The communication interface is coupled to the processor, and the processor is configured to run a program or instructions to implement the method according to the first aspect.

According to a seventh aspect, a computer program product is provided, where the computer program product is stored in a non-transit storage medium, and the computer program product is executed by at least one processor to implement steps of the method according to the first aspect.

According to an eighth aspect, a communication device is provided and configured to implement steps of the method according to the first aspect.

In the embodiments of this application, the delay-Doppler frame includes at least two subframes, and each subframe includes three parts: a first guard interval portion, a first mapping portion, and two second mapping portions. The same information is mapped to the second mapping portions at heads of different subframes, the same information is mapped to the second mapping portions at tails of different subframes, and the foregoing first guard interval portion is used. This can ensure that equivalent channels of the subframes are the same. Then, the mapping information in the first mapping portion is subjected to diversity coding, thereby obtaining a diversity gain or coding gain. Therefore, space-time coding in delay-Doppler domain is implemented under the premise that channels of multiple delay-Doppler frames are ensured to be the same.

## BRIEF DESCRIPTION OF DRAWINGS

FIG. 1 is a structural diagram of a communication system to which embodiments of this application can be applied;

FIG. 2 is a schematic flowchart of an information mapping method according to an embodiment of this application;

FIG. 3 is a first schematic diagram of delay-Doppler frame mapping according to an embodiment of this application;

FIG. 4 is a second schematic diagram of delay-Doppler frame mapping according to an embodiment of this application;

FIG. 5 is a third schematic diagram of delay-Doppler frame mapping according to an embodiment of this application;

FIG. 6 is a fourth schematic diagram of delay-Doppler frame mapping according to an embodiment of this application;

FIG. 7 is a fifth schematic diagram of delay-Doppler frame mapping according to an embodiment of this application;

FIG. 8 is a schematic diagram of a cyclic prefix position according to an embodiment of this application;

FIG. 9 is a schematic diagram of a cyclic suffix position according to an embodiment of this application;

FIG. 10 is a schematic modular diagram of an information mapping apparatus according to an embodiment of this application;

FIG. 11 is a structural block diagram of a communication device according to an embodiment of this application;

FIG. 12 is a structural block diagram of a terminal according to an embodiment of this application; and

FIG. 13 is a structural block diagram of a network-side device according to an embodiment of this application.

## DESCRIPTION OF EMBODIMENTS

The following clearly describes the technical solutions in embodiments of this application with reference to the accompanying drawings in the embodiments of this application. Apparently, the described embodiments are some but not all embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, "and/or" in the specification and claims represents at least one of connected objects, and the character "/" generally indicates that the contextually associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions. These technologies may also be applied to other applications than an NR system application, for example, the 6th generation (6th Generation, 6G) communication system.

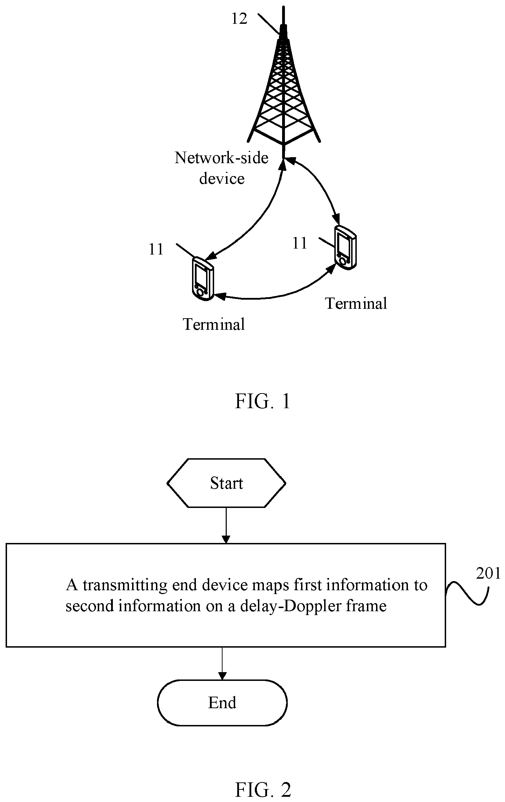

FIG. 1 is a structural diagram of a wireless communication system to which embodiments of this application may be applied. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture). The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, a game console, or the like. It should be noted that the terminal 11 is not limited to a specific type in the embodiments of this application. The network-side device 12 may be a base station or a core network device, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (wireless fidelity, WiFi) node, a transmission-reception point (Transmitting Receiving Point, TRP), or some other appropriate term in the art. As long as the same technical effects are achieved, the base station is not limited to any specific technical term. It should be noted that the base station in the NR system is used as an only example in the embodiments of this application, and the base station is not limited to any specific type.

The following describes in detail the information mapping method provided in the embodiments of this application by using specific embodiments and application scenarios thereof with reference to the accompanying drawings.

As shown in FIG. 2, an embodiment of this application provides an information mapping method including the following step.

Step 201. A transmitting end device maps first information to second information on a delay-Doppler frame.

The delay-Doppler frame includes M×N grids, M is the total number of delay indexes, N is the total number of Doppler indexes, and both M and N are positive integers;

> the delay-Doppler frame includes at least two subframes, and each subframe includes a first guard interval portion, a first mapping portion, and two second mapping portions;
> the two second mapping portions occupy grids corresponding to $k_{max}$ Doppler indexes at a head and a tail of the subframe in a Doppler direction, and the first mapping portion occupies grids corresponding to ( $N/G$ - $2k_{max}$ ) Doppler indexes of the subframe; G being the number of subframes in the delay-Doppler frame, and $k_{max}$ being a positive integer; and information mapped to second mapping portions at heads of different subframes is the same, and information mapped to second mapping portions at tails of different subframes is the same.

In this embodiment of this application, each delay index corresponds to one grid, and each Doppler index corresponds to one grid. The configuration information corresponding to the first guard interval portion is 0, indicating that the first guard interval portion is not used for transmitting information.

Additionally, the transmitting end device may be a network-side device, such as a base station, or may be a terminal device.

The signal received by the receiving end in delay-Doppler domain is a result of performing two-dimensional convolution on a delay-Doppler domain signal from the transmitting end and a delay-Doppler domain channel. Under the effect of two-dimensional convolution, for a signal in delay-Doppler domain, the head interferes with the tail in the delay direction, and similarly, the tail interferes with the head in the Doppler direction. In the scenario of multiple subframes, that is, the tail of one subframe interferes with the head of a next adjacent subframe. To avoid such interference between subframes, it is necessary to provide a guard interval portion at the head and tail in the delay direction and Doppler direction of each subframe, so as to prevent interference between data. In addition to providing a guard interval portion, a same piece of information is mapped to head positions of all subframes in the Doppler direction, and another same piece of information is mapped to tail positions of all subframes in the Doppler direction. In this way, for each subframe, the head of the subframe interferes with the tail of another subframe. Since the heads of all subframes are the same and the tails of all subframes are also the same, the interference experienced by the subframes is always the same. As such, channels over which different subframes are transmitted can be considered to be equivalently the same.

In this embodiment of this application, the delay-Doppler frame includes at least two subframes, and each subframe includes three parts: a first guard interval portion, a first mapping portion, and two second mapping portions. The same information is mapped to the second mapping portions at heads of different subframes, the same information is mapped to the second mapping portions at tails of different subframes, and the foregoing first guard interval portion is used. This can ensure that equivalent channels of the subframes are the same. Then, the mapping information in the first mapping portion is subjected to diversity coding, thereby obtaining a diversity gain or coding gain. Therefore, space-time coding in delay-Doppler domain is implemented under the premise that channels of multiple delay-Doppler frames are ensured to be the same.

Optionally, the first guard interval portion occupies all grids corresponding to $l_{max}$ delay indexes at a tail of the delay-Doppler frame in a delay direction; where $l_{max} < M$.

Further, optionally, $l_{max} \geq \tau_{max} M \Delta f$, where $\tau_{max}$ represents a maximum channel delay, and $\Delta f$ represents a subcarrier spacing in time-frequency domain.

Optionally, at least one of the first mapping portion and the second mapping portion occupies grids corresponding to $(M - l_{max})$ Doppler indexes of the delay-Doppler frame.

Optionally, $k_{max} \geq v_{max} NT$, where $v_{max}$ represents a maximum channel Doppler shift, and $T = 1 / \Delta f$ represents a duration of one symbol in time-frequency domain.

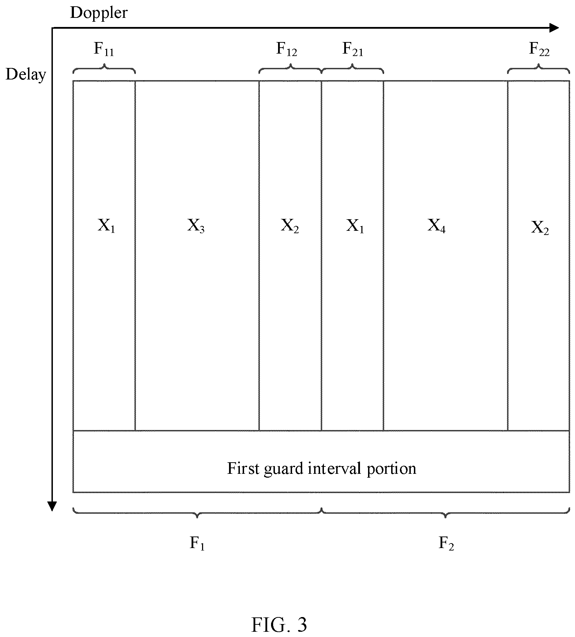

For example, in a specific embodiment of this application, as shown in FIG. 3, a delay-Doppler frame is equally divided into a first half subframe $F_1$ and a second half subframe $F_2$ in the Doppler direction. A second mapping portion $F_{11}$ is grids corresponding to $k_{max}$ Doppler indexes at the head in the Doppler direction and grids corresponding to $M - l_{max}$ Doppler indexes in the delay direction in $F_1$, a second mapping portion $F_{12}$ is grids corresponding to $k_{max}$ Doppler indexes at the tail in the Doppler direction and grids corresponding to $M - l_{max}$ Doppler indexes in the delay direction in $F_1$, a second mapping portion $F_{21}$ is grids corresponding to $k_{max}$ Dop-

pler indexes at the head in the Doppler direction and grids corresponding to $M - l_{max}$ Doppler indexes in the delay direction in $F_2$, and a second mapping portion $F_{22}$ is grids corresponding to $k_{max}$ Doppler indexes at the tail in the Doppler direction and grids corresponding to $M - l_{max}$ Doppler indexes in the delay direction in $F_2$.

Optionally, the first information includes a first information block, a second information block, and a third information block; and

the mapping, by a transmitting end device, first information to second information on a delay-Doppler frame includes:

mapping the first information block to grids corresponding to the second mapping portion at a head of each subframe, mapping the second information block to grids corresponding to the second mapping portion at a tail of each subframe, and equally dividing the third information block into G sub-blocks and respectively mapping the G sub-blocks to grids corresponding to the first mapping portion of each subframe.

As shown in FIG. 3, a first information block $X_1$ is mapped to $F_{11}$ and $F_{21}$, a second information block $X_2$ is mapped to $F_{12}$ and $F_{22}$, and a third information block is equally divided into two sub-blocks $X_3$ and $X_4$, that is, G=2, where $X_3$ is mapped to the first mapping portion of $F_1$, and $X_4$ is mapped to the first mapping portion of $F_2$.

Optionally, the first information block and the second information block are obtained by splitting information bits used for channel coding in the first information.

In a specific embodiment of this application, when the first information includes information bits for channel coding, the information can be split into two parts (the first information block and the second information block).

Optionally, the first information block and the second information block include a pilot.

The pilot may be a pulse pilot or sequence pilot.

Optionally, the delay-Doppler frame further includes:

a second guard interval portion provided around the pilot.

In this embodiment of this application, the second guard interval portion is provided around the pilot to prevent interference between the pilot and data.

Optionally, the second guard interval portion meets at least one of the following that:

in a case that the pilot is a pulse pilot, the second guard interval portion occupies grids corresponding to $(l_p - l_{max})$ to $(l_p + l_{max})$ delay indexes and occupies grids corresponding to $(k_p - 2k_{max})$ to $(k_p + 2k_{max})$ Doppler indexes; and
in a case that the pilot is a sequence pilot, the second guard interval portion occupies grids corresponding to $(l_{p,min} - l_{max})$ to $(l_{p,max} + l_{max})$ delay indexes and occupies grids corresponding to $(k_{p,min} - 2k_{max})$ to $(k_{p,max} + 2k_{max})$ Doppler indexes; where
$l_p$ is a delay index corresponding to a grid occupied by the pilot, $k_p$ is a Doppler index corresponding to the grid occupied by the pilot, $l_{p,min}$ is a minimum of delay indexes corresponding to grids occupied by all elements of the pilot sequence, $l_{p,max}$ is a maximum of the delay indexes corresponding to the grids occupied by all the elements of the pilot sequence, $k_{p,min}$ is a minimum of Doppler indexes corresponding to the grids occupied by all the elements of the pilot sequence, $k_{p,max}$ is a maximum of the Doppler indexes corresponding to the grids occupied by all the elements of the pilot sequence, and $l_{max}$ is the number of delay indexes corresponding to grids occupied by the first guard interval portion.

The configuration information corresponding to the second guard interval portion is 0, indicating that the second guard interval portion is not used for transmitting information.

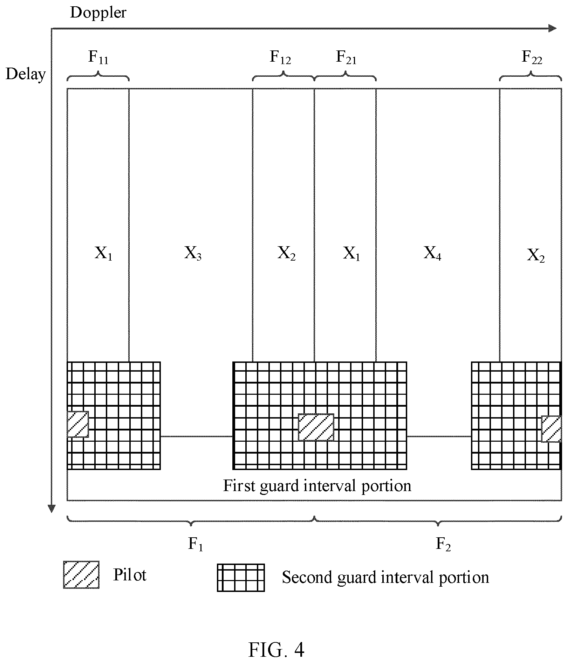

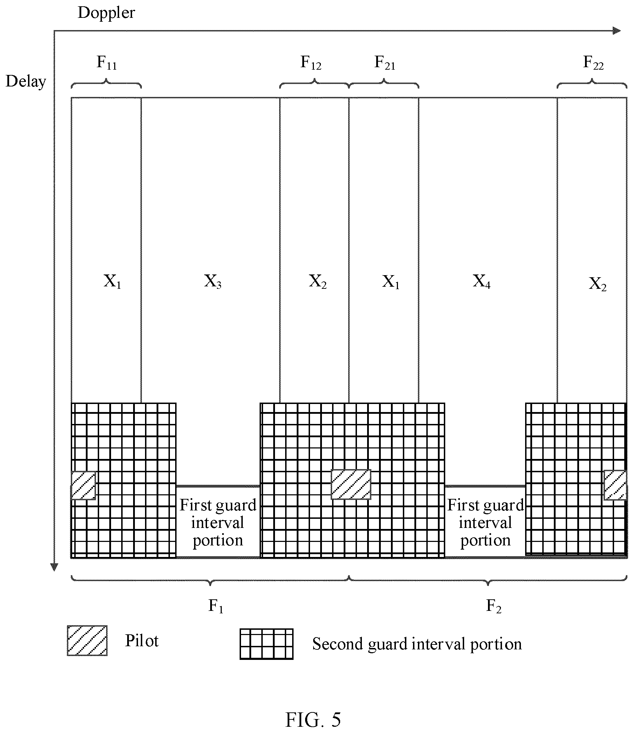

Specifically, as shown in FIG. 4 or FIG. 5, based on FIG. 3, to prevent interference of data with the pilot or interference between pilots for different antennas, $l_{max}$ grids are provided as guard intervals on both sides of the pilot in the delay direction, and $2k_{max}$ grids are provided as guard intervals on both sides of the pilot in the Doppler direction.

Optionally, the mapping the first information block to grids corresponding to the second mapping portion at a head of each subframe includes:

mapping the first information block multiplied by different phase offsets to the grids corresponding to the second mapping portion at the head of each subframe.

Optionally, the mapping the second information block to grids corresponding to the second mapping portion at a tail of each subframe includes:

mapping the second information block multiplied by different phase offsets to the grids corresponding to the second mapping portion at the tail of each subframe.

Optionally, the first information includes delay-Doppler information corresponding to L antennas, each piece of delay-Doppler information includes three information blocks, and each delay-Doppler frame includes L subframes, L being greater than or equal to 2 and each antenna corresponding to one delay-Doppler frame; and the mapping, by a transmitting end device, first information to second information on a delay-Doppler frame includes:

mapping information block $S_{i1}$ to grids corresponding to the second mapping portion at a head of each subframe corresponding to the i-th antenna; mapping information block $S_{i2}$ to grids corresponding to the second mapping portion at a tail of each subframe corresponding to the i-th antenna; and equally dividing information block $S_{i3}$ into L sub-blocks and mapping the L sub-blocks to grids corresponding to the first mapping portion of each subframe corresponding to the i-th antenna; where $S_{ij}$ represents the j-th information block of delay-Doppler information corresponding to the i-th antenna, $1 \leq j \leq 3$, j is a positive integer, and i is a positive integer greater than or equal to 1.

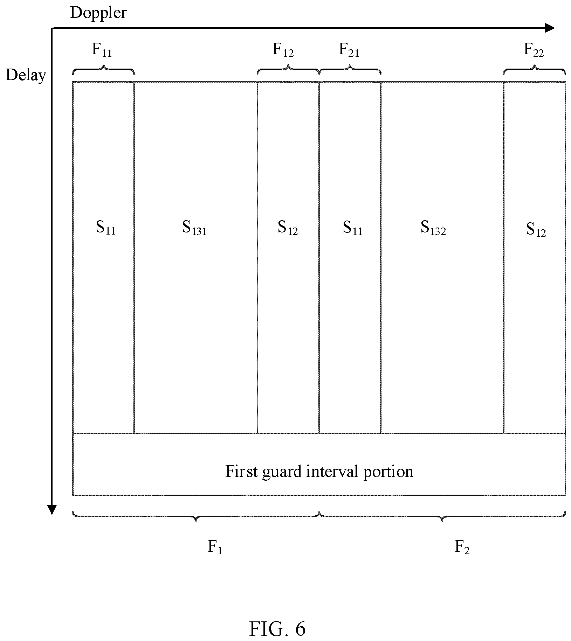

In a specific embodiment of this application, it is assumed that the delay-Doppler frame includes a first delay-Doppler frame corresponding to a first antenna and a second delay-Doppler frame corresponding to a second antenna. Delay-Doppler information corresponding to the first antenna is divided into three information blocks: the first information block ($S_{11}$), the second information block ($S_{12}$), and the third information block ($S_{13}$). Then, the third information block is equally divided into two sub-blocks $S_{131}$ and $S_{132}$. As shown in FIG. 6, for antenna 1, $S_{11}$ is mapped to $F_{11}$ and $F_{21}$, $S_{12}$ is mapped to $F_{21}$ and $F_{22}$, $S_{131}$ is mapped to the first mapping portion of $F_1$, and $S_{131}$ is mapped to the first mapping portion of $F_2$.

Delay-Doppler information corresponding to the second antenna is divided into three information blocks: the first information block ($S_{21}$), the second information block ($S_{22}$), and the third information block ($S_{23}$). Then, the third information block is equally divided into two sub-blocks $S_{231}$ and $S_{232}$.

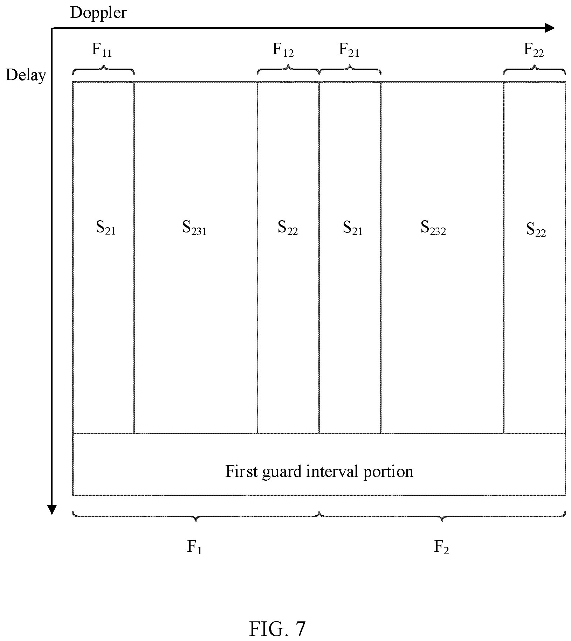

As shown in FIG. 7, for antenna 2, $S_{21}$ is mapped to $F_{11}$ and $F_{21}$, $S_{22}$ is mapped to $F_{21}$ and $F_{22}$, $S_{231}$ is mapped to the first mapping portion of $F_1$, and $S_{232}$ is mapped to the first mapping portion of $F_2$, where

$$S_{21} = S_{11}, \text{ and } S_{22} = S_{12}.$$

Optionally, the first information includes first delay-Doppler information corresponding to a first antenna and second delay-Doppler information corresponding to a second antenna, and the delay-Doppler frame includes a first delay-Doppler frame corresponding to the first delay-Doppler information and a second delay-Doppler frame corresponding to the second delay-Doppler information; and the method further includes:

transmitting the second information after content of the first mapping portion is processed in a preset manner; where the preset manner includes at least one of the following:

exchanging first mapping information and second mapping information, where the first mapping information is mapping information in a first mapping portion of the $P_1$-th subframe of the first delay-Doppler frame, and the second mapping information is mapping information in a first mapping portion of the $P_2$-th subframe of the second delay-Doppler frame, $P_1$ and $P_2$ being different and $P_1$ and $P_2$ both being positive integers; where for example, $S_{232}$ and $S_{131}$ are

exchanged, and/or $S_{231}$ and $S_{132}$ are exchanged;

exchanging third mapping information and the second mapping information, where the third mapping information is obtained by performing conjugation on the first mapping information; where for example, $S_{232}$ and $S_{131}^*$ are exchanged, and $S_{131}^*$ indicates conjugation of $S_{131}$;

exchanging fourth mapping information and the first mapping information, where the fourth mapping information is obtained by performing conjugation on the second mapping information; where for example, $S_{231}$ and $S_{132}^*$ are exchanged, and $S_{132}^*$ indicates conjugation of $S_{132}$;

exchanging fifth mapping information and the second mapping information, where the fifth mapping information is obtained by rearranging the first mapping information; where for example, $S_{231}$ and $\hat{S}_{132}$ are exchanged, and $\hat{S}_{132}$ indicates rearrangement of $S_{132}$, that is, rearrangement of elements in $S_{132}$;

exchanging sixth mapping information and the first mapping information, where the sixth mapping information is obtained by rearranging the second mapping information; where for example, $S_{132}$ and $\hat{S}_{231}$ are exchanged, and $\hat{S}_{231}$ indicates rearrangement of $S_{231}$, that is, rearrangement of elements in $S_{231}$;

exchanging seventh mapping information and the second mapping information, where the seventh mapping information is mapping information obtained by multiplying the first mapping information by a first phase offset; and

exchanging eighth mapping information and the first mapping information, where the eighth mapping information is mapping information obtained by multiplying the second mapping information by a second phase offset.

Optionally, after the mapping, by a transmitting end device, first information to second information on a delay-Doppler frame, the method further includes:

performing time-frequency domain transform on the second information to obtain second information in time-frequency domain; and
adding a third guard interval portion to the second information in time-frequency domain.

In this embodiment of this application, the delay-Doppler information (second information) is converted into time-frequency domain, and a corresponding guard interval is added in time-frequency domain.

Optionally, the adding a third guard interval portion to the second information in time-frequency domain includes:

adding the third guard interval portion to at least one of a specific time position and a specific frequency position of the second information.

Optionally, configuration information corresponding to the third guard interval portion is 0 or a cyclic prefix or a cyclic suffix.

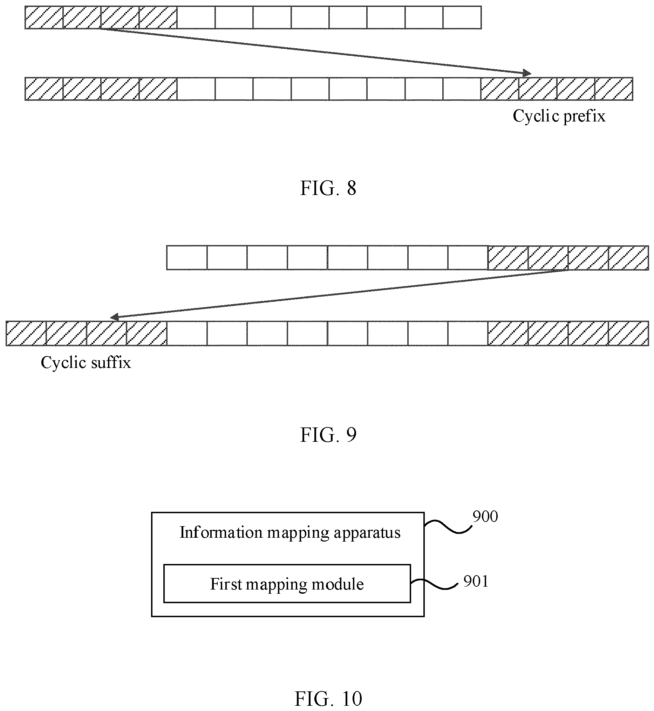

As shown in FIG. 8, a cyclic prefix is added in time domain, and as shown in FIG. 9, a cyclic suffix is added in time domain.

Optionally, the method of this embodiment of this application further includes:

notifying, by the transmitting end device, target information to a receiving end device through first signaling; where
the target information includes at least one of the following:

position information of the first guard interval portion in the delay-Doppler frame;
position information of the first mapping portion in the delay-Doppler frame;
position information of the second mapping portion in the delay-Doppler frame; and
content information of a pilot in the first information and position information of the pilot in the delay-Doppler frame.

Optionally, the first signaling includes at least one of the following:

radio resource control signaling;
physical downlink control channel layer 1 signaling;
physical downlink shared channel information;
medium access control control element signaling;
system information block;
physical uplink control channel layer 1 signaling;
physical random access channel MSG 1 information;
physical random access channel MSG 2 information;
physical random access channel MSG 3 information;
physical random access channel MSG 4 information;
physical random access channel MSG A information;
physical random access channel MSG B information;
physical uplink shared channel information;
wireless inter-node (Xn) interface signaling;
direct communication (PC5) interface signaling; and
sidelink (Sidelink) interface signaling.

It should be noted that in this embodiment of this application, the sidelink can also be referred to as a side link or side-link.

In addition, in this embodiment of this application, when the transmitting end device is a single-antenna device, after the first information is mapped to the second information on the delay-Doppler frame, a pilot and guard interval are added in the delay-Doppler domain, and orthogonal time frequency space (Orthogonal Time Frequency Space, OTFS) modulation (inverse symplectic finite fourier transform (Inverse Symplectic Finite Fourier Transform, ISFFT) and Heisenberg transform) are performed, and finally, a guard interval is added in time domain.

Moreover, the target information can also be determined through a protocol. Information from different layers can be mapped to the first mapping portion, and the embodiments of this application can also be applied to the scenario where a base station serves multiple users, with shared information of the multiple users placed in the second mapping portion and individual information of each user placed in the first mapping portion.

In this embodiment of this application, the delay-Doppler frame includes at least two subframes, and each subframe includes three parts: a first guard interval portion, a first mapping portion, and two second mapping portions. The same information is mapped to the second mapping portions at heads of different subframes, the same information is mapped to the second mapping portions at tails of different subframes, and the foregoing first guard interval portion is used. This can ensure that equivalent channels of the subframes are the same. Then, the mapping information in the first mapping portion is subjected to diversity coding, thereby obtaining a diversity gain or coding gain. Therefore, space-time coding in delay-Doppler domain is implemented under the premise that channels of multiple delay-Doppler frames are ensured to be the same.

It should be noted that the information mapping method of this embodiment of this application may be executed by an information mapping apparatus or a control module for executing the information mapping method in the information mapping apparatus. In this embodiment of this application, the information mapping method being executed by the information mapping apparatus is used as an example to describe the information mapping apparatus of the embodiments of this application.

As shown in FIG. 10, an embodiment of this application provides an information mapping apparatus 900 including:

a first mapping module 901 configured to map first information to second information on a delay-Doppler frame; where
the delay-Doppler frame includes M×N grids, M is the total number of delay indexes, N is the total number of Doppler indexes, and both M and N are positive integers;
the delay-Doppler frame includes at least two subframes, and each subframe includes a first guard interval portion, a first mapping portion, and two second mapping portions;
the two second mapping portions occupy grids corresponding to $k_{max}$ Doppler indexes at a head and a tail of the subframe in a Doppler direction, and the first mapping portion occupies grids corresponding to ( $N/G$ - $2k_{max}$ ) Doppler indexes of the subframe; G being the number of subframes in the delay-Doppler frame, and $k_{max}$ being a positive integer; and information mapped to second mapping portions at heads of different subframes is the same, and information mapped to second mapping portions at tails of different subframes is the same.

Optionally, the apparatus of this embodiment of this application further includes:
a determining module configured to determine the delay-Doppler frame.

Optionally, the first guard interval portion occupies all grids corresponding to $l_{max}$ delay indexes at a tail of the delay-Doppler frame in a delay direction; where $l_{max}$ < M.

Optionally, $l_{max} \geq \tau_{max} M \Delta f$, where $\tau_{max}$ represents a maximum channel delay, and $\Delta f$ represents a subcarrier spacing in time-frequency domain.

Optionally, at least one of the first mapping portion and the second mapping portion occupies grids corresponding to ($M$ -$l_{max}$) Doppler indexes of the delay-Doppler frame.

Optionally, $k_{max} \geq v_{max} NT$, where $v_{max}$ represents a maximum channel Doppler shift, and $T$ = 1 / $\Delta f$ represents a duration of one symbol in time-frequency domain.

Optionally, the first information includes a first information block, a second information block, and a third information block; and
the first mapping module is configured to map the first information block to grids corresponding to the second mapping portion at a head of each subframe, map the second information block to grids corresponding to the second mapping portion at a tail of each subframe, and equally divide the third information block into G sub-blocks and respectively map the G sub-blocks to grids corresponding to the first mapping portion of each subframe.

Optionally, the first information block and the second information block are obtained by splitting information bits used for channel coding in the first information.

Optionally, the first information block and the second information block include a pilot.

Optionally, the delay-Doppler frame further includes:
a second guard interval portion provided around the pilot.

Optionally, the second guard interval portion meets at least one of the following that:

in a case that the pilot is a pulse pilot, the second guard interval portion occupies grids corresponding

to $(l_p - l_{max})$ to $(l_p + l_{max})$ delay indexes and occupies grids corresponding to $(k_p - 2k_{max})$ to $(k_p + 2k_{max})$ Doppler indexes; and

in a case that the pilot is a sequence pilot, the second guard interval portion occupies grids corresponding to $(l_{p,min} - l_{max})$ to $(l_{p,max} + l_{max})$ delay indexes and occupies grids corresponding to $(k_{p,min} - 2k_{max})$ to $(k_{p,max} + 2k_{max})$ Doppler indexes; where

$l_p$ is a delay index corresponding to a grid occupied by the pilot, $k_p$ is a Doppler index corresponding to the grid occupied by the pilot, $l_{p,min}$ is a minimum of delay indexes corresponding to grids occupied by all elements of the pilot sequence, $l_{p,max}$ is a maximum of the delay indexes corresponding to the grids occupied by all the elements of the pilot sequence, $k_{p,min}$ is a minimum of Doppler indexes corresponding to the grids occupied by all the elements of the pilot sequence, $k_{p,max}$ is a maximum of the Doppler indexes corresponding to the grids occupied by all the elements of the pilot sequence, and $l_{max}$ is the number of delay indexes corresponding to grids occupied by the first guard interval portion.

Optionally, the first mapping module is configured to map the first information block multiplied by different phase offsets to the grids corresponding to the second mapping portion at a head of each subframe.

Optionally, the first mapping module is configured to map the second information block multiplied by different phase offsets to the grids corresponding to the second mapping portion at a tail of each subframe.

Optionally, the first information includes delay-Doppler information corresponding to L antennas, each piece of delay-Doppler information includes three information blocks, and each delay-Doppler frame includes L subframes, L being greater than or equal to 2; and

the mapping, by a transmitting end device, first information to second information on a delay-Doppler frame includes:

mapping information block $S_{i1}$ to grids corresponding to the second mapping portion at a head of each subframe corresponding to the i-th antenna; mapping information block $S_{i2}$ to grids corresponding to the second mapping portion at a tail of each subframe corresponding to the i-th antenna; and equally dividing information block $S_{i3}$ into L sub-blocks and mapping the L sub-blocks to grids corresponding to the first mapping portion of each subframe corresponding to the i-th antenna; where

$S_{ij}$ represents the j-th information block of delay-Doppler information corresponding to the i-th antenna, $1 \leq j \leq 3$, j is a positive integer, and i is a positive integer greater than or equal to 1.

Optionally, the first information includes first delay-Doppler information corresponding to a first antenna and second delay-Doppler information corresponding to a second antenna, and the delay-Doppler frame includes a first delay-Doppler frame corresponding to the first delay-Doppler information and a second delay-Doppler frame corresponding to the second delay-Doppler information; and

the apparatus further includes:

a first processing module configured to transmit the second information after content of the first mapping portion is processed in a preset manner; where the preset manner includes at least one of the following:

exchanging first mapping information and second mapping information, where the first mapping information is mapping information in a first mapping portion of the $P_1$-th subframe of the first delay-Doppler frame, and the second mapping information is mapping information in a first mapping portion of the $P_2$-th subframe of the second delay-Doppler frame, $P_1$ and $P_2$ being different and $P_1$ and $P_2$ both being positive integers;

exchanging third mapping information and the second mapping information, where the third mapping information is obtained by performing conjugation on the first mapping information;

exchanging fourth mapping information and the first mapping information, where the fourth mapping information is obtained by performing conjugation on the second mapping information;

exchanging fifth mapping information and the second mapping information, where the fifth mapping information is obtained by rearranging the first mapping information;

exchanging sixth mapping information and the first mapping information, where the sixth mapping information is obtained by rearranging the second mapping information;

exchanging seventh mapping information and the second mapping information, where the seventh mapping information is mapping information obtained by multiplying the first mapping information by a first phase offset; and

exchanging eighth mapping information and the first mapping information, where the eighth mapping information is mapping information obtained by multiplying the second mapping information by a second phase offset.

Optionally, the apparatus of this embodiment of this application further includes:

a second processing module configured to: after the first mapping module maps the first information to the second information on the delay-Doppler frame, perform time-frequency domain transform on the second information to obtain second information in time-frequency domain; and

a third processing module configured to add a third guard interval portion to the second information in time-frequency domain.

Optionally, the third processing module is configured to add the third guard interval portion to at least one of a specific time position and a specific frequency position of the second information.

Optionally, configuration information corresponding to the third guard interval portion is 0 or a cyclic prefix or a cyclic suffix.

Optionally, the apparatus of this embodiment of this application further includes:

a notification module configured to notify target information to a receiving end device through first signaling; where

the target information includes at least one of the following:

position information of the first guard interval portion in the delay-Doppler frame;
position information of the first mapping portion in the delay-Doppler frame;
position information of the second mapping portion in the delay-Doppler frame; and
content information of a pilot in the first information and position information of the pilot in the delay-Doppler frame.

Optionally, the first signaling includes at least one of the following:

radio resource control signaling;
physical downlink control channel layer 1 signaling;
physical downlink shared channel information;
medium access control control element signaling;
system information block;
physical uplink control channel layer 1 signaling;
physical random access channel MSG 1 information;
physical random access channel MSG 2 information;
physical random access channel MSG 3 information;
physical random access channel MSG 4 information;
physical random access channel MSG A information;
physical random access channel MSG B information;
physical uplink shared channel information;
Xn interface signaling;
PC5 interface signaling; and
sidelink (Sidelink) interface signaling.

In the apparatus of this embodiment of this application, the delay-Doppler frame includes at least two subframes, and each subframe includes three parts: a first guard interval portion, a first mapping portion, and two second mapping portions. The same information is mapped to the second mapping portions at heads of different subframes, the same information is mapped to the second mapping portions at tails of different subframes, and the foregoing first guard interval portion is used. This can ensure that equivalent channels of the subframes are the same. Then, the mapping information in the first mapping portion is subjected to diversity coding, thereby obtaining a diversity gain or coding gain. Therefore, space-time coding in delay-Doppler domain is implemented under the premise that channels of multiple delay-Doppler frames are ensured to be the same.

The information mapping apparatus provided in this embodiment of this application can implement the processes implemented by the method embodiments in FIG. 2 and FIG. 9. To avoid repetition, details are not described herein again.

The information mapping apparatus may be a terminal or may be a network-side device, and in a case of a terminal, may be a component, an integrated circuit, or a chip in the terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (Personal Computer, PC), a television (Television, TV), a teller machine, a self-service machine, or the like, which are not specifically limited in the embodiments of this application. The information mapping apparatus in the embodiments of this application may be an apparatus having an operating system. The operating system may be an android (Android) operating system, an iOS operating system, or another possible operating system. This is not specifically limited in an embodiment of this application.

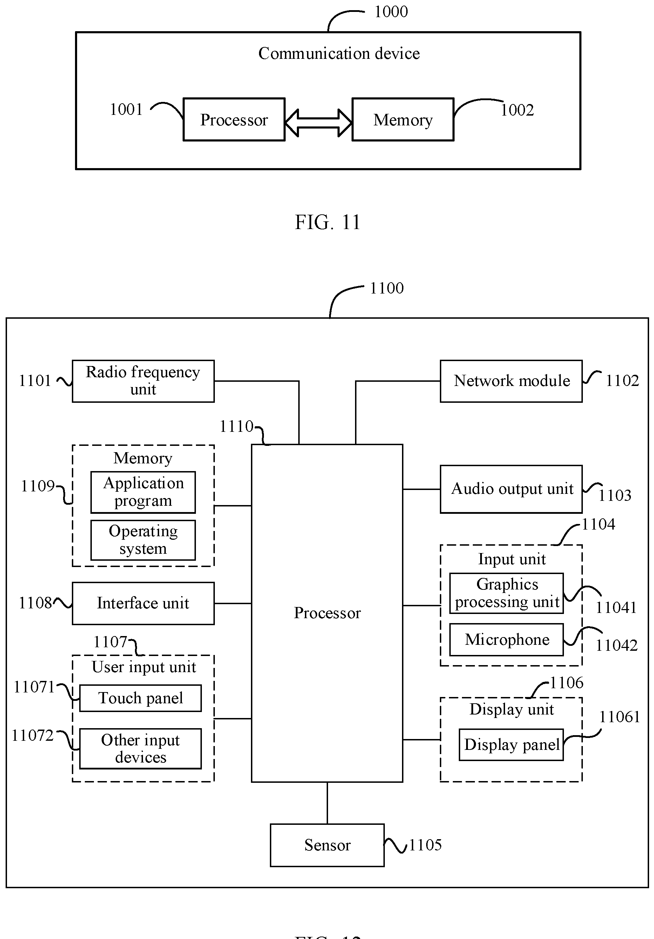

Optionally, as shown in FIG. 11, an embodiment of this application further provides a communication device 1000 including a processor 1001, a memory 1002, and a program or instructions stored in the memory 1002 and executable on the processor 1001. In a case that the communication device 1000 is the foregoing transmitting end device, the program or instructions are executed by the processor 1001 to implement the processes of the foregoing embodiments of the information mapping method, with the same technical effects achieved. To avoid repetition, details are not described herein again.

The information mapping apparatus in this embodiment of this application may be a terminal or may be a network-side device. In a case that the information mapping apparatus is a terminal, a schematic structural diagram thereof is shown in FIG. 12. The terminal 1100 includes but is not limited to at least some of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power source (for example, a battery) for supplying power to the components. The power source may be logically connected to the processor 1110 through a power management system. In this way, functions such as charge management, discharge management, and power consumption management are implemented by using the power management system. The structure of the terminal shown in FIG. 12 does not constitute a limitation on the terminal. The terminal may include more or fewer components than illustrated in the figure, or combine some components, or have a different component arrangement. Details are not described herein.

It should be understood that in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in an image capture mode or a video capture mode. The display unit 1106 may include a display panel 11061. The display panel 11061 may be configured in a form of a liquid crystal display, an organic light-emitting diode display, or the like. The user input unit 1107 includes a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a function button (such as a volume control button or a power button), a trackball, a mouse, and a joystick. Details are not described now.

In this embodiment of this application, the radio frequency unit 1101 transmits downlink data received from a network-side device to the processor 1110 for processing, and in addition, transmits uplink data to the network-side device. Generally, the radio frequency unit 1101 includes but is not limited to an antenna, at least one amplifier, a transceiver, a coupler, a low noise amplifier, and a duplexer.

The memory 1109 may be adapted to store software programs or instructions and various data. The memory 1109 may include a program or instruction storage area and a data storage area. The program or instruction storage area may store an operating system, an application program or instructions required by at least one function (for example, sound play function or image play function), and the like. In addition, the memory 1109 may include high-speed random access memory and may also include non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 1110 may include one or more processing units. Optionally, the processor 1110 may integrate an application processor and a modem processor. The application processor mainly processes an operating system, a user interface, an application program or instructions, and the like. The modem processor mainly processes wireless communication, for example, being a baseband processor. It can be understood that a modem processor may alternatively skip being integrated in the processor 1110.

The processor 1110 is configured to map first information to second information on a delay-Doppler frame; where

the delay-Doppler frame includes M×N grids, M is the total number of delay indexes, N is the total number of Doppler indexes, and both M and N are positive integers;
the delay-Doppler frame includes at least two subframes, and each subframe includes a first guard interval portion, a first mapping portion, and two second mapping portions;
the two second mapping portions occupy grids corresponding to $k_{max}$ Doppler indexes at a head and a tail of the subframe in a Doppler direction, and the first mapping portion occupies grids corresponding to ( $N/G - 2k_{max}$ ) Doppler indexes of the subframe; G being the number of subframes in the delay-Doppler frame, and $k_{max}$ being a positive integer; and
information mapped to second mapping portions at heads of different subframes is the same, and information mapped to second mapping portions at tails of different subframes is the same.

Optionally, the first guard interval portion occupies all grids corresponding to $l_{max}$ delay indexes at a tail of the delay-Doppler frame in a delay direction; where $l_{max} < M$.

Optionally, $l_{max} \geq \tau_{max}M\Delta f$ , where $\tau_{max}$ represents a maximum channel delay, and $\Delta f$ represents a subcarrier spacing in time-frequency domain.

Optionally, at least one of the first mapping portion and the second mapping portion occupies grids corresponding to ($M - l_{max}$) Doppler indexes of the delay-Doppler frame.

Optionally, $k_{max} \geq v_{max}NT$ , where $v_{max}$ represents a maximum channel Doppler shift, and $T = 1 / \Delta f$ represents a duration of one symbol in time-frequency domain.

Optionally, the first information includes a first information block, a second information block, and a third information block; and
the processor 1110 is configured to map the first information block to grids corresponding to the second mapping portion at a head of each subframe, map the second information block to grids corresponding to the second mapping portion at a tail of each subframe, and equally divide the third information block into G sub-blocks and respectively map the G sub-blocks to grids corresponding to the first mapping portion of each subframe.

Optionally, the first information block and the second information block are obtained by splitting information bits used for channel coding in the first information.

Optionally, the first information block and the second information block include a pilot.

Optionally, the delay-Doppler frame further includes:

a second guard interval portion provided around the pilot.

Optionally, the second guard interval portion meets at least one of the following that:

in a case that the pilot is a pulse pilot, the second guard interval portion occupies grids corresponding to $(l_p - l_{max})$ to $(l_p + l_{max})$ delay indexes and occupies grids corresponding to $(k_p - 2k_{max})$ to $(k_p + 2k_{max})$ Doppler indexes; and

in a case that the pilot is a sequence pilot, the second guard interval portion occupies grids corresponding to $(l_{p,min} - l_{max})$ to $(l_{p,max} + l_{max})$ delay indexes and occupies grids corresponding to $(k_{p,min} - 2k_{max})$ to $(k_{p,max} + 2k_{max})$ Doppler indexes; where

$l_p$ is a delay index corresponding to a grid occupied by the pilot, $k_p$ is a Doppler index corresponding to the grid occupied by the pilot, $l_{p,min}$ is a minimum of delay indexes corresponding to grids occupied by all elements of the pilot sequence, $l_{p,max}$ is a maximum of the delay indexes corresponding to the grids occupied by all the elements of the pilot sequence, $k_{p,min}$ is a minimum of Doppler indexes corresponding to the grids occupied by all the elements of the pilot sequence, $k_{p,max}$ is a maximum of the Doppler indexes corresponding to the grids occupied by all the elements of the pilot sequence, and $l_{max}$ is the number of delay indexes corresponding to grids occupied by the first guard interval portion.

Optionally, the processor 1110 is configured to map the first information block multiplied by different phase offsets to the grids corresponding to the second mapping portion at a head of each subframe.

Optionally, the processor 1110 is configured to map the second information block multiplied by different phase offsets to the grids corresponding to the second mapping portion at a tail of each subframe.

Optionally, the first information includes delay-Doppler information corresponding to L antennas, each piece of delay-Doppler information includes three information blocks, and each delay-Doppler frame includes L subframes, L being greater than or equal to 2; and

the processor 1110 is configured to map information block $S_{i1}$ to grids corresponding to the second mapping portion at a head of each subframe corresponding to the i-th antenna; map information block $S_{i2}$ to grids corresponding to the second mapping portion at a tail of each subframe corresponding to the i-th antenna; and equally divide information block $S_{i3}$ into L sub-blocks and map the L sub-blocks to grids corresponding to the first mapping portion of each subframe corresponding to the i-th antenna; where $S_{ij}$ represents the j-th information block of delay-Doppler information corresponding to the i-th antenna, $1 \leq j \leq 3$, j is a positive integer, and i is a positive integer greater than or equal to 1.

Optionally, the first information includes first delay-Doppler information corresponding to a first antenna and second delay-Doppler information corresponding to a second antenna, and the delay-Doppler frame includes a first delay-Doppler frame corresponding to the first delay-Doppler information and a second delay-Doppler frame corresponding to the second delay-Doppler information; and

the processor 1110 is configured to transmit the second information after content of the first mapping portion is processed in a preset manner; where the preset manner includes at least one of the following:

exchanging first mapping information and second mapping information, where the first mapping information is mapping information in a first mapping portion of the P1-th subframe of the first delay-Doppler frame, and the second mapping information is mapping information in a first mapping portion of the P2-th subframe of the second delay-Doppler frame, P1 and P2 being different and P1 and P2 both being positive integers;

exchanging third mapping information and the second mapping information, where the third mapping information is obtained by performing conjugation on the first mapping information;

exchanging fourth mapping information and the first mapping information, where the fourth mapping information is obtained by performing conjugation on the second mapping information;

exchanging fifth mapping information and the second mapping information, where the fifth mapping information is obtained by rearranging the first mapping information;

exchanging sixth mapping information and the first mapping information, where the sixth mapping information is obtained by rearranging the second mapping information;

exchanging seventh mapping information and the second mapping information, where the seventh mapping information is mapping information obtained by multiplying the first mapping information by a first phase offset; and

exchanging eighth mapping information and the first mapping information, where the eighth mapping information is mapping information obtained by multiplying the second mapping information by a second phase offset.

Optionally, after first information is mapped to second information on a delay-Doppler frame, the processor 1110 is further configured to perform time-frequency domain transform on the second information to obtain second information in time-frequency domain; and add a third guard interval portion to the second information in time-frequency domain.

Optionally, the processor 1110 is configured to add the third guard interval portion to at least one of a specific time position and a specific frequency position of the second information.

Optionally, configuration information corresponding to the third guard interval portion is 0 or a cyclic prefix or a cyclic suffix.

Optionally, the processor 1110 is further configured to notify target information to a receiving end device through first signaling; where

the target information includes at least one of the following:

> position information of the first guard interval portion in the delay-Doppler frame;
> position information of the first mapping portion in the delay-Doppler frame;
> position information of the second mapping portion in the delay-Doppler frame; and
> content information of a pilot in the first information and position information of the pilot in the delay-Doppler frame.

Optionally, the first signaling includes at least one of the following:

> radio resource control signaling;
> physical downlink control channel layer 1 signaling;
> physical downlink shared channel information;
> medium access control control element signaling;
> system information block;
> physical uplink control channel layer 1 signaling;
> physical random access channel MSG 1 information;
> physical random access channel MSG 2 information;
> physical random access channel MSG 3 information;
> physical random access channel MSG 4 information;
> physical random access channel MSG A information;
> physical random access channel MSG B information;
> physical uplink shared channel information;
> Xn interface signaling;
> PC5 interface signaling; and
> sidelink (Sidelink) interface signaling.

In this embodiment of this application, the delay-Doppler frame includes at least two subframes, and each subframe includes three parts: a first guard interval portion, a first mapping portion, and two second mapping portions. The same information is mapped to the second mapping portions at heads of different subframes, the same information is mapped to the second mapping portions at tails of different subframes, and the foregoing first guard interval portion is used. This can ensure that equivalent channels of the subframes are the same. Then, the mapping information in the first mapping portion is subjected to diversity coding, thereby obtaining a diversity gain or coding gain. Therefore, space-time coding in delay-Doppler domain is implemented under the premise that channels of multiple delay-Doppler frames are ensured to be the same.

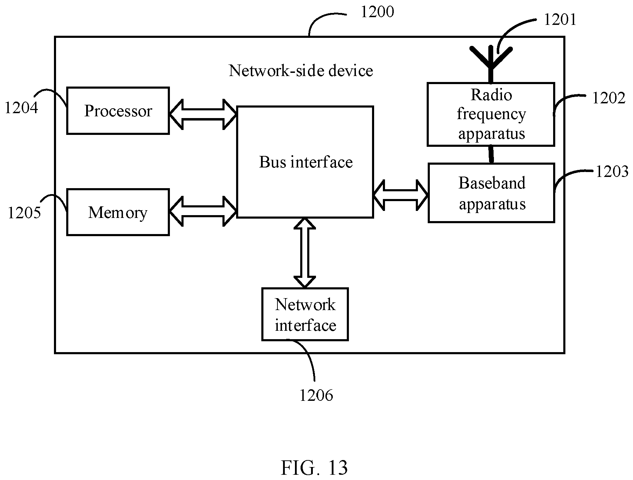

In a case that the information mapping apparatus is a network-side device, as shown in FIG. 13, the network-side device includes an antenna 1201, a radio frequency apparatus 1202, and a baseband apparatus 1203. The antenna 1201 is connected to the radio frequency apparatus 1202. In an uplink direction, the radio frequency apparatus 1202 receives information by using the antenna 1201, and transmits the received information to the baseband apparatus 1203 for processing. In a downlink direction, the baseband apparatus 1203 processes to-be-transmitted information, and transmits the information to the radio frequency apparatus 1202; and the radio frequency apparatus 1202 processes the received information and then transmits the information by using the antenna 1201.

The frequency band processing apparatus may be located in the baseband apparatus 1203. The method performed by the network-side device in the foregoing embodiment may be implemented by the baseband apparatus 1203, and the baseband apparatus 1203 includes a processor 1204 and a memory 1205.

The baseband apparatus 1203 may include, for example, at least one baseband processing unit, where a plurality of chips are disposed on the baseband processing unit. As shown in FIG. 13, one of the chips is, for example, the processor 1204, and connected to the memory 1205, to invoke the program in the memory 1205 to perform the operations of the transmitting end device in the foregoing method embodiment.

The baseband apparatus 1203 may further include a network interface 1206, configured to exchange information with the radio frequency apparatus 1202, where the interface is, for example, a common public radio interface (Common Public Radio Interface, CPRI).

Specifically, the network-side device in this embodiment of the present application further includes instructions or a program stored in the memory 1205 and executable on the processor 1204. The processor 1204 invokes the instructions or program in the memory 1205 to perform the method performed by the modules shown in FIG. 10, with the same technical effects achieved. To avoid repetition, details are not described herein.

An embodiment of this application further provides a communication device including a processor and a communication interface. The processor is configured to map first information to second information on a delay-Doppler frame; where

the delay-Doppler frame includes M×N grids, M is the total number of delay indexes, N is the total number of Doppler indexes, and both M and N are positive integers;

the delay-Doppler frame includes at least two subframes, and each subframe includes a first guard interval portion, a first mapping portion, and two second mapping portions;

the two second mapping portions occupy grids corresponding to $k_{max}$ Doppler indexes at a head and a tail of the subframe in a Doppler direction, and the first mapping portion occupies grids corresponding to ( $N/G$ - $2k_{max}$ ) Doppler indexes of the subframe; G being the number of subframes in the delay-Doppler frame, and $k_{max}$ being a positive integer; and information mapped to second mapping portions at heads of different subframes is the same, and information mapped to second mapping portions at tails of different subframes is the same.

This embodiment corresponds to the foregoing method embodiment. All processes and implementations in the foregoing method embodiment can be applicable to this embodiment, with the same technical effects achieved.

An embodiment of this application further provides a readable storage medium, where the storage medium may be volatile or non-volatile. The readable storage medium stores a program or instructions, and when the program or instructions are executed by a processor, the processes of the foregoing embodiments of the resource mapping method are implemented, with the same technical effects achieved. To avoid repetition, details are not described herein again.

The processor is the processor in the terminal or the network-side device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the embodiment of the information mapping method, with the same technical effect achieved. To avoid repetition, details are not described herein again.

An embodiment of this application further provides a computer program/program product. The computer program/program product is stored in a non-transient storage medium, and the program/program product is executed by at least one processor to implement the steps of the foregoing information mapping method.

It should be understood that the chip mentioned in an embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the foregoing description of the embodiments, persons skilled in the art can clearly understand that the method in the foregoing embodiments may be implemented by software with a necessary general hardware platform. Certainly, the method in the foregoing embodiments may alternatively be implemented by hardware. However, in many cases, the former is a preferred embodiment. Based on such an understanding, the technical solutions of this application essentially, or the part contributing to the related art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. These specific embodiments are merely for illustration rather than limitation. Inspired by this application, persons of ordinary skill in the art may develop many other forms without departing from the essence of this application and the protection scope of the claims, and all such forms shall fall within the protection scope of this application.

**Claims**

1.  An information mapping method, comprising:

    mapping, by a transmitting end device, first information to second information on a delay-Doppler frame; wherein
    the delay-Doppler frame comprises $M \times N$ grids, M is a total number of delay indexes, N is a total number of Doppler indexes, and both M and N are positive integers;
    the delay-Doppler frame comprises at least two subframes, and each subframe comprises a first guard interval portion, a first mapping portion, and two second mapping portions;
    the two second mapping portions occupy grids corresponding to $k_{max}$ Doppler indexes at a head and a tail of the subframe in a Doppler direction, and the first mapping portion occupies grids corresponding to $(N/G - 2k_{max})$ Doppler indexes of the subframe; G being a number of subframes in the delay-Doppler frame, and $k_{max}$ being a positive integer; and
    information mapped to second mapping portions at heads of different subframes is same, and information mapped to second mapping portions at tails of different subframes is same.

2.  The method according to claim 1, wherein the first guard interval portion occupies all grids corresponding to $l_{max}$ delay indexes at a tail of the delay-Doppler frame in a delay direction;
    wherein $l_{max}$ is less than M.

3.  The method according to claim 2, wherein $l_{max}$ is greater than or equal to a product of $\tau_{max}$, M and $\Delta f$, wherein
    $\tau_{max}$ represents a maximum channel delay, and $\Delta f$ represents a subcarrier spacing in time-frequency domain.

4.  The method according to claim 2, wherein at least one of the first mapping portion and a second mapping portion occupies grids corresponding to $(M - l_{max})$ Doppler indexes of the delay-Doppler frame.

5.  The method according to claim 1, wherein $k_{max}$ is greater than or equal to a product of $v_{max}$, N and T, wherein
    $v_{max}$ represents a maximum channel Doppler shift, and T being a quotient of 1 divided by $\Delta f$ represents a duration of one symbol in time-frequency domain.

6.  The method according to claim 1, wherein the first information comprises a first information block, a second information block, and a third information block; and
    the mapping, by a transmitting end device, first information to second information on a delay-Doppler frame comprises:
    mapping the first information block to grids corresponding to a second mapping portion at a head of each subframe, mapping the second information block to grids corresponding to a second mapping portion at a tail of each subframe, and equally dividing the third information block into G sub-blocks and respectively mapping the G sub-blocks to grids corresponding to the first mapping portion of each subframe.

7.  The method according to claim 6, wherein the first information block and the second information block are obtained by splitting information bits used for channel coding in the first information.

8.  The method according to claim 6, wherein the first information block and the second information block comprise a pilot.

9.  The method according to claim 8, wherein the delay-Doppler frame further comprises:
    a second guard interval portion provided around the pilot.

10. The method according to claim 9, wherein the second guard interval portion meets at least one of following that:

    in a case that the pilot is a pulse pilot, the second guard interval portion occupies grids corresponding to $(l_p - l_{max})$ to $(l_p + l_{max})$ delay indexes and occupies grids corresponding to $(k_p - 2k_{max})$ to $(k_p + 2k_{max})$ Doppler indexes; and
    in a case that the pilot is a sequence pilot, the second guard interval portion occupies grids corresponding to $(l_{p,min} - l_{max})$ to $(l_{p,max} + l_{max})$ delay indexes and occupies grids corresponding to $(k_{p,min} - 2k_{max})$ to $(k_{p,max} + 2k_{max})$ Doppler indexes; wherein
    $l_p$ is a delay index corresponding to a grid occupied by the pilot, $k_p$ is a Doppler index corresponding to the grid occupied by the pilot, $l_{p,min}$ is a minimum of delay indexes corresponding to grids occupied by all elements of a pilot sequence, $l_{p,max}$ is a maximum of the delay indexes corresponding to the grids occupied by all the elements of the pilot sequence, $k_{p,min}$ is a minimum of Doppler indexes corresponding to the grids occupied by all the elements of the pilot sequence, $k_{p,max}$ is a maximum of the Doppler indexes corresponding to the grids occupied by all the elements of the pilot sequence, and $l_{max}$ is a number of delay indexes corresponding to grids occupied by the first guard interval portion.

11. The method according to claim 6, wherein the mapping the first information block to grids corresponding to a second mapping portion at a head of each subframe comprises:

mapping the first information block multiplied by different phase offsets to the grids corresponding to the second mapping portion at the head of each subframe.

12. The method according to claim 6, wherein the mapping the second information block to grids corresponding to a second mapping portion at a tail of each subframe comprises:

mapping the second information block multiplied by different phase offsets to the grids corresponding to the second mapping portion at the tail of each subframe.

13. The method according to claim 1, wherein the first information comprises delay-Doppler information corresponding to L antennas, each piece of delay-Doppler information comprises three information blocks, and each delay-Doppler frame comprises L subframes, L being greater than or equal to 2; and the mapping, by a transmitting end device, first information to second information on a delay-Doppler frame comprises:

mapping information block $S_{i1}$ to grids corresponding to a second mapping portion at a head of each subframe corresponding to an i-th antenna; mapping information block $S_{i2}$ to grids corresponding to a second mapping portion at a tail of each subframe corresponding to the i-th antenna; and equally dividing information block $S_{i3}$ into L sub-blocks and mapping the L sub-blocks to grids corresponding to a first mapping portion of each subframe corresponding to the i-th antenna; wherein

$S_{ij}$ represents a j-th information block of delay-Doppler information corresponding to the i-th antenna, j is equal to 1, or j is greater than 1 and less than 3, or j is equal to 3, j is a positive integer, and i is a positive integer greater than or equal to 1.

14. The method according to claim 13, wherein the first information comprises first delay-Doppler information corresponding to a first antenna and second delay-Doppler information corresponding to a second antenna, and the delay-Doppler frame comprises a first delay-Doppler frame corresponding to the first delay-Doppler information and a second delay-Doppler frame corresponding to the second delay-Doppler information; and the method further comprises:

transmitting the second information after content of the first mapping portion is processed in a preset manner; wherein the preset manner comprises at least one of following:

exchanging first mapping information and second mapping information, wherein the first mapping information is mapping information in a first mapping portion of a $P_1$-th subframe of the first delay-Doppler frame, and the second mapping information is mapping information in a first mapping portion of a $P_2$-th subframe of the second delay-Doppler frame, $P_1$ and $P_2$ being different and $P_1$ and $P_2$ both being positive integers; exchanging third mapping information and the second mapping information, wherein the third mapping information is obtained by performing conjugation on the first mapping information; exchanging fourth mapping information and the first mapping information, wherein the fourth mapping information is obtained by performing conjugation on the second mapping information; exchanging fifth mapping information and the second mapping information, wherein the fifth mapping information is obtained by rearranging the first mapping information; exchanging sixth mapping information and the first mapping information, wherein the sixth mapping information is obtained by rearranging the second mapping information; exchanging seventh mapping information and the second mapping information, wherein the seventh mapping information is mapping information obtained by multiplying the first mapping information by a first phase offset; and exchanging eighth mapping information and the first mapping information, wherein the eighth mapping information is mapping information obtained by multiplying the second mapping information by a second phase offset.

15. The method according to claim 1, after the mapping, by a transmitting end device, first information to second information on a delay-Doppler frame, further comprising:

performing time-frequency domain transform on the second information to obtain second information in time-frequency domain; and adding a third guard interval portion to the second information in time-frequency domain.

16. The method according to claim 15, wherein the adding a third guard interval portion to the second information in time-frequency domain comprises:
adding the third guard interval portion to at least one of a specific time position and a specific frequency position of the second information.

17. The method according to claim 16, wherein configuration information corresponding to the third guard interval portion is 0 or a cyclic prefix or a cyclic suffix.

18. The method according to claim 1, further comprising:

notifying, by the transmitting end device, target information to a receiving end device through first signaling; wherein
the target information comprises at least one of following:

position information of the first guard interval portion in the delay-Doppler frame;
position information of the first mapping portion in the delay-Doppler frame;
position information of a second mapping portion in the delay-Doppler frame; and
content information of a pilot in the first information and position information of the pilot in the delay-Doppler frame.

19. The method according to claim 18, wherein the first signaling comprises at least one of following:

radio resource control signaling;
physical downlink control channel layer 1 signaling;
physical downlink shared channel information;
medium access control control element signaling;
system information block;
physical uplink control channel layer 1 signaling;
physical random access channel MSG 1 information;
physical random access channel MSG 2 information;
physical random access channel MSG 3 information;
physical random access channel MSG 4 information;
physical random access channel MSG A information;
physical random access channel MSG B information;
physical uplink shared channel information;
wireless inter-node Xn interface signaling;
direct communication PC5 interface signaling; and
sidelink interface signaling.

20. An information mapping apparatus, comprising:

a first mapping module configured to map first information to second information on a delay-Doppler frame; wherein
the delay-Doppler frame comprises $M \times N$ grids, M is a total number of delay indexes, N is a total number of Doppler indexes, and both M and N are positive integers;
the delay-Doppler frame comprises at least two subframes, and each subframe comprises a first guard interval portion, a first mapping portion, and two second mapping portions;
the two second mapping portions occupy grids corresponding to $k_{max}$ Doppler indexes at a head and a tail of the subframe in a Doppler direction, and the first mapping portion occupies grids corresponding to ($N/G - 2k_{max}$) Doppler indexes of the subframe; G being a number of subframes in the delay-Doppler frame, and $k_{max}$ being a positive integer; and
information mapped to second mapping portions at heads of different subframes is same, and information mapped to second mapping portions at tails of different subframes is same.

21. The apparatus according to claim 20, wherein the first guard interval portion occupies all grids corresponding to $l_{max}$ delay indexes at a tail of the delay-Doppler frame in a delay direction;
wherein $l_{max}$ is less than M.

22. The apparatus according to claim 21, wherein $l_{max}$ is greater than or equal to a product of $\tau_{max}$, M and $\Delta f$, wherein
$\tau_{max}$ represents a maximum channel delay, and $\Delta f$ represents a subcarrier spacing in time-frequency domain.

23. The apparatus according to claim 21, wherein at least one of the first mapping portion and a second mapping portion occupies grids corresponding to ($M -l_{max}$) Doppler indexes of the delay-Doppler frame.

24. The apparatus according to claim 20, wherein $k_{max}$ is greater than or equal to a product of $v_{max}$, N and T, wherein
$v_{max}$ represents a maximum channel Doppler shift, and T being a quotient of 1 divided by $\Delta f$ represents a duration of one symbol in time-frequency domain.

25. The apparatus according to claim 20, wherein the first information comprises a first information block, a second information block, and a third information block; and
the first mapping module is configured to map the first information block to grids corresponding to a second mapping portion at a head of each subframe, map the second information block to grids corresponding to a second mapping portion at a tail of each subframe, and equally divide the third information block into G sub-blocks and respectively map the G sub-blocks to grids corresponding to the first mapping portion of each subframe.

26. The apparatus according to claim 25, wherein the first information block and the second information block are obtained by splitting information bits used for channel coding in the first information.

27. A communication device, comprising a processor, a memory, and a program or instructions stored in the memory and executable on the processor, wherein when the program or the instructions are executed by the processor, steps of the information mapping method according to any one of claims 1 to 19 are implemented.

28. A readable storage medium, wherein the readable storage medium stores a program or instructions, and when the program or the instructions are executed by a processor, steps of the information mapping method according to any one of claims 1 to 19 are implemented.

29. A chip, wherein the chip comprises a processor and a communication interface, wherein the communication interface is coupled to the processor, and the processor is configured to run a program or instructions to implement steps of the information mapping method according to any one of claims 1 to 19.

30. A computer program product, wherein when the computer program product is executed by at least one processor, steps of the information mapping method according to any one of claims 1 to 19 are implemented.

31. A communication device configured to implement steps of the information mapping method according to any one of claims 1 to 19.

FIG. 1

FIG. 2

Doppler

Delay

$F_{11}$  $F_{12}$  $F_{21}$  $F_{22}$

| $X_1$ | $X_3$ | $X_2$ | $X_1$ | $X_4$ | $X_2$ |

First guard interval portion

$F_1$  $F_2$

FIG. 3

FIG. 4

FIG. 5

Doppler

Delay

| $F_{11}$ | | $F_{12}$ | $F_{21}$ | | $F_{22}$ |

$S_{11}$　　　$S_{131}$　　　$S_{12}$　$S_{11}$　　　$S_{132}$　　　$S_{12}$

First guard interval portion

$F_1$　　　　　　$F_2$

FIG. 6

Doppler

Delay

$F_{11}$ $F_{12}$ $F_{21}$ $F_{22}$

$S_{21}$ $S_{231}$ $S_{22}$ $S_{21}$ $S_{232}$ $S_{22}$

First guard interval portion

$F_1$ $F_2$

FIG. 7

Cyclic prefix

FIG. 8

Cyclic suffix

FIG. 9

Information mapping apparatus — 900

First mapping module — 901

FIG. 10

1000

Communication device

1001 — Processor ⟷ Memory — 1002

FIG. 11

1100

1101 — Radio frequency unit

Network module — 1102

1110 —

Memory
1109 —
Application program

Operating system

1108 — Interface unit

1107 —
User input unit
11071 — Touch panel

11072 — Other input devices

Processor

Audio output unit — 1103

1104
Input unit
Graphics processing unit — 11041

Microphone — 11042

1106
Display unit
Display panel — 11061

Sensor — 1105

FIG. 13

## INTERNATIONAL SEARCH REPORT

| | International application No. |
|---|---|
| | **PCT/CN2022/125408** |

| **A.** | **CLASSIFICATION OF SUBJECT MATTER** |
|---|---|

H04L 5/00(2006.01)i

According to International Patent Classification (IPC) or to both national classification and IPC

| **B.** | **FIELDS SEARCHED** |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

DWPI; EPODOC; CNPAT; CNKI: 延迟, 多普勒, 子帧, 空时编码, 映射, 栅格, 网格, 编码, OTFS, 第一, 第二, delay, subframe, space-time, coding+, map+, grid, first, second

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | US 2019238189 A1 (COHERE TECHNOLOGIES, INC.) 01 August 2019 (2019-08-01) description, column 9, line 19-column 10, line 11, and figures 2A and 2B | 1-31 |
| A | US 2021288709 A1 (QUALCOMM INC.) 16 September 2021 (2021-09-16) entire document | 1-31 |
| A | CN 109196812 A (COHERE TECHNOLOGIES, INC.) 11 January 2019 (2019-01-11) entire document | 1-31 |
| A | CN 108770382 A (COHERE TECHNOLOGIES, INC.) 06 November 2018 (2018-11-06) entire document | 1-31 |
| A | CN 111884975 A (BEIJING INSTITUTE OF TECHNOLOGY) 03 November 2020 (2020-11-03) entire document | 1-31 |
| A | CN 110731071 A (NTT DOCOMO INC.) 24 January 2020 (2020-01-24) entire document | 1-31 |
| A | CN 109348739 A (COHERE TECHNOLOGIES, INC.) 15 February 2019 (2019-02-15) entire document | 1-31 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 222022** | **16 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/125408**

| Patent document cited in search report | | | Publication date (day/month/year) | Patent family member(s) | | | Publication date (day/month/year) |
|---|---|---|---|---|---|---|---|
| US | 2019238189 | A1 | 01 August 2019 | WO | 2018064605 | A1 | 05 April 2018 |
| | | | | EP | 3520310 | A1 | 07 August 2019 |
| US | 2021288709 | A1 | 16 September 2021 | WO | 2021188550 | A1 | 23 September 2021 |
| CN | 109196812 | A | 11 January 2019 | US | 2017288710 | A1 | 05 October 2017 |
| | | | | US | 2019036577 | A1 | 31 January 2019 |
| | | | | US | 2020228170 | A1 | 16 July 2020 |
| | | | | EP | 3437197 | A1 | 06 February 2019 |
| | | | | WO | 2017173461 | A1 | 05 October 2017 |
| | | | | US | 2021367645 | A1 | 25 November 2021 |
| | | | | KR | 20180129897 | A | 05 December 2018 |
| CN | 108770382 | A | 06 November 2018 | CN | 114285540 | A | 05 April 2022 |
| | | | | KR | 20190008827 | A | 25 January 2019 |
| | | | | US | 2018262306 | A1 | 13 September 2018 |
| | | | | EP | 3348015 | A1 | 18 July 2018 |
| | | | | US | 2021351880 | A1 | 11 November 2021 |
| | | | | WO | 2017044501 | A1 | 16 March 2017 |
| CN | 111884975 | A | 03 November 2020 | None | | | |
| CN | 110731071 | A | 24 January 2020 | US | 2021143961 | A1 | 13 May 2021 |
| | | | | CA | 3067322 | A1 | 20 December 2018 |
| | | | | JP | WO2018229958 | A1 | 16 April 2020 |
| | | | | WO | 2018229958 | A1 | 20 December 2018 |
| | | | | EP | 3641255 | A1 | 22 April 2020 |
| CN | 109348739 | A | 15 February 2019 | US | 2019379422 | A1 | 12 December 2019 |
| | | | | WO | 2017147439 | A1 | 31 August 2017 |
| | | | | EP | 3420641 | A1 | 02 January 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111209306

- CN 202111205722